**Europäisches Patentamt**

(19) **European Patent Office**

**Office européen des brevets**

(11) Publication number : **0 313 529 B1**

(12) **EUROPEAN PATENT SPECIFICATION**

(45) Date of publication of patent specification :
26.02.92 Bulletin 92/09

(51) Int. Cl.⁵ : **A01K 95/00**

(21) Application number : **88830430.0**

(22) Date of filing : **24.10.88**

(54) **Device for attaching sinkers to fishing-rod lines.**

(30) Priority : **23.10.87 IT 952587**

(43) Date of publication of application :
**26.04.89 Bulletin 89/17**

(45) Publication of the grant of the patent :
**26.02.92 Bulletin 92/09**

(84) Designated Contracting States :
**DE FR GB**

(56) References cited :
**FR-A- 1 234 052**
**US-A- 3 070 815**
**US-A- 3 153 959**
**US-A- 3 162 869**

(73) Proprietor : **EFFEVUEMME S.n.c. di PIERI & C.**
**Via di Castelpulci Viottolone**
**Scandicci Florence (IT)**
Proprietor : **Stoppioni, Ivo**
**Via Panciatichi, 56/7**
**Florence (IT)**

(72) Inventor : **Pieri, Franco**
**35, Via Donizetti**
**Scandicci (Florence) (IT)**
Inventor : **Stoppioni, Ivo**
**56/7, Via Panciatichi**
**Florence (IT)**

(74) Representative : **Bardini, Marco Luigi et al**
**c/o Società Italiana Brevetti S.p.A. Corso dei**
**Tintori, 25**
**I-50122 Firenze (IT)**

## Description

The subject of the present invention is a device for attaching sinkers to fishing-rod lines.

As is well-known, one of the most common methods of fishing is to use a float and a line weighted with split shot. The weighting, or reinforcement, consists of a number of sinkers with an incision made in them that are attached to the line on a scale commensurate with the kind of fish being fished. The diameter of the sinkers can vary from 5mm down to the smallest sizes, 1.5mm, 1.3mm and 1.1mm. Obviously there are quite a few problems regarding attachment of the latter kind of sinkers, which are extensively used however in fishing competitions, and this makes the competitor or the ordinary fisherman lose valuable time.

A number of devices have been developed for attaching sinkers to fishing-rod lines with a view to making the fisherman's task easier, which usually incorporate a container for the sinkers and a system for conveying the latter from where they are retrieved from the container to a point where they are attached to the line, suitably positioned and held taut with the fingers. They also comprise a blade, positioned either along the line of travel or at the arrival point, for making a diametrical cut where the line is to be accommodated.

In an early type of such devices, a sliding component is provided for conveying the plummets, which retrieves each of them from a container positioned above it and pushes it inside a funnel-shaped housing where a blade makes a diametrical incision in it. After this, the line has to be inserted in the incision and the sinker squeezed so as to fasten it to the line. A prior art device of this type is disclosed in US patent No.3162869 wherein a lever arm first actuates a knife edge to form a diametrical cut on the sinker and then pushes the slide carrying the cut sinker up to a projected position where the line is engaged with the slit formed in the sinker. By further pushing the slide, the sinker is tightened on the line. In this case it is very difficult to control the pushing action in such a way to avoid closing the sinker before the line has been engaged in the sinker slit. In other devices of this type, in order to avoid this inconvenience, by pressing or turning the three operations (conveyance, incision and squeezing) are carried out one after the other, involving the pressing or turning of separate levers and/or buttons.

In a second type of such a device, the blade shuts off the outlet of the container, so that when it is removed it lets out a sinker, which drops down into a seating below. The blade is lowered to make a cut in the sinker, the line is inserted in the cut, and the sinker is squeezed.

In a third type of such a device, the sinker is conveyed by means of a rotating drum, making reciprocating 90° movements, which retrieves the sinker from a lateral container and conveyes it to a position where it can engage the line, after thrusting it against a fixed blade for an incision to be made in it. The line is previously accomodated in a lateral groove to the middle of which the sinker, already incised, is conveyed for engagement with the line and so that, owing to the particular configuration of the groove, it can be tightened onto it.

A device having a rotating drum for conveying the sinkers from a retrieval station to an attaching station is disclosed in US patent No.3153959. In this case the drum is rotated continuously or intermittently by means of a lever to convey a sinker from the retrieval station to the attaching station through a cutting station equipped with a rotating blade. The sinker is tightened on the line in a separate station located downstream of the attaching station and consisting of a pair of parallel surfaces placed at a fixed distance from one another between which the sinker engaging the line is forced to pass. The above described device further has a grip wherein the sinkers are stored. In the known devices of the kind described above, the operation of attaching sinkers to the line is, to a varying degree, awkward and imprecise. At least two operations are necessary, in fact, one after the other, and the line needs to be accurately positioned in relation to the plummets; nor is it possible, moreover, to regulate the force employed in tightening the sinkers onto the line according to need, since this force is either exercised manually or in causing the sinker to pass through calibrated walls, subject to wear. It must be borne in mind that, in this connection, the sinkers sometimes need to be fastened onto the line in such a way that they can slide along it and at other times need to be fastened onto it so tightly that they cannot be moved. Finally, devices of the known type are not suitable for the attachment of sinkers of small sizes (1.3 and 1.4 mm in diameter, for example) owing to the difficulty of making an accurate incision and engaging the line in said incision.

The aim of the present invention is to provide a device enabling sinkers to be attached to a fishing-rod line in a single operation and with the use of only one hand, so that it functions faster and is more convenient than the known devices mentioned above.

Another aim of the present invention is to provide a device of the aforesaid type that is highly precise, and one that is capable of, in particular, also attaching plummets of the smallest sizes available on the market.

A further aim of the present invention is to provide a device of the aforementioned type wherein the pressure employed in tightening the sinker onto the line can be adjusted in accordance with that is required, and kept constant.

The device for attaching sinkers to fishing rod lines in accordance with the invention has the features defined in claim 1.

The device according to the invention allows an easier and more accurate attachment of the sinker to the line to be carried out. In fact, by gripping the device in accordance with the invention with one hand and causing it to slide along the line, inserted in the appropriate groove, it is possible to fasten sinkers onto the line, either tightly or so that they can slide, by squeezing the lever with the same hand until it recedes completely into the grip. This action in fact actuates, in synchronized succession, the conveyance of the sinker from retrieval station to attachment station, with an intermediate diametrical cut being carried out, engagement of the line, and the fastening of the sinker onto the same.

Other characteristics and advantages of the device for attaching sinkers onto fishing-rod lines in accordance with the invention will be more clearly discernible from the following description of one embodiment thereof, which is given as an example and is not limitative, with reference to the attached drawings, where:

Fig. 1 is a plan view of the device in accordance with the present invention;

Fig. 2 is a side view of it;

Fig. 3 is a frontal view of it;

Fig. 4 is an exploded view of it in perspective.

As in seen in reference to the aforementioned figures, the device in accordance with the present invention comprises a box-like casing indicated generically, by 1, formed of two parts, called respectively the bottom part 1a and the top part 1b, essentially flat, and designed to be joined together by means of screws and nuts 2. The bottom part 1a of the casing exhibits on its front edge 3 a groove 4 that is more or less in a V shape, for receiving the line during the shot attachment stage. At a midway point on the groove 4 there is a through hole 5 communicating with a housing 6, more or less circular in shape, formed inside the part 1a. In the centre of the housing 6 a pin 7 is fitted on which a drum 8 is mounted so that it can revolve, one section 8a being of the same diameter as the housing 6 and the other section 8b being of a smaller diameter. The two sections 8a and 8b are bounded, along the edges of the drum, by two shoulders 9 at right angles, meeting on the opposing sides of a projection 10 extending radially from the edge of the housing 6, in such a manner that the two shoulders 9 act as a stop for the drum 8, and enable the latter to move at an angle of 90° round the pin 7.

A groove 11 is cut along the edge of the section of larger diameter 8a of the drum 8, at the halfway point of which is formed a housing 12 for a sinker, the former opening upwards. Also in the housing 6 there can be seen, positioned laterally, a housing 13 for a blade 14 the cutting edge of which projects into the groove 11 of the drum 8. The housing 13 is for the most part positioned so that it is diametrically opposed to the projection 10 and is at an angle of less than 90° in relation to the through hole 5 in the front groove 4. A further housing 15 is also to be seen on the housing 6 for a resilient component 16 bringing pressure to bear with one of its curved ends on the edge of the section with a larger diameter 8a of the drum 8, said edge exhibiting in the proximity of one of its shoulders a recess 17 for receiving said curved end in order to prohibit the rotation of the drum, as will be explained later. Above the rotary drum 8 is fixed a washer 18 of an appropriate thickness and of a diameter equal to that of the housing 6. The washer 18 exhibits in the centre a slot 19 which engages on the profiled head 7a of the pin 7 so as to make a non-rotatable joint. Two radial grooves 20 and 21 are cut along the rim of the washer 18, positioned at an angle of 90°, corresponding respectively with the housing 12 of the drum 8 and the through hole 5 in the front groove 4. Correct positioning of the grooves 20 and 21 when the washer 19 is being mounted is assured by a notch 22 cut on the rim of the washer 18 designed to engage the projection 10 from the edge of the housing 6, acting in this way as a reference.

The bottom part of the box-like casing 1 extends, on the side opposed to the front edge 3 in relation to the housing 6, to form a grip 23 and exhibits a large longitudinal cavity 24 communicating with the housing 6 and also extending inside the grip 23. The bottom section of the drum 8 comprises a serrated surface 25 in correspondence with the cavity 24. Sideways to the grip 23, and in a radial direction in relation to the pin 7, there extends a lever 26 resting on a pin 27 as a fulcrum pressed into a seating 28 on the bottom part 1a and at right angles to it. One end of the lever 26 has a serrated profile 29 designed to engage the serrated part 25 of the drum 8, whilst on the opposing end in relation to the pin 27 a grip 30 is formed on the outside of the lever whilst on the inside, that side, that is to say, intended for making a shaped profile, or cam 31, go into the cavity 24.

Along the grip 23 belonging to the bottom part 1a of the casing 1 there is a longitudinal housing 32 extending in a radial direction in relation to the housing 6 and communicating with the cavity 24. An arm 33 is fitted along the longitudinal housing 32 with an intermediate transverse pin 34 supported by a pair of bearings 35 positioned sideways to the housing 32 in the vicinity of the housing 6. The arm 33 extends over the washer 18 till it corresponds with the groove 21 and is fitted with a pin 36 in alignment with it suitably dimensioned to go inside said groove. The pin 36 is maintained in a raised position in relation to the groove 21 by means of a spiral spring 37 housed inside the pin 7, whilst at the opposite end of the arm 33 is an enlargement 38 resting in the appropriate housing 39 formed on the bottom of the longitudinal groove 32 on the path travelled by the cam 31 of the lever 26 in the course of the latter's receding movement. The pin 36 is supported by an adjusting screw 40, which regulates the depth to which it penetrates inside the groove 21.

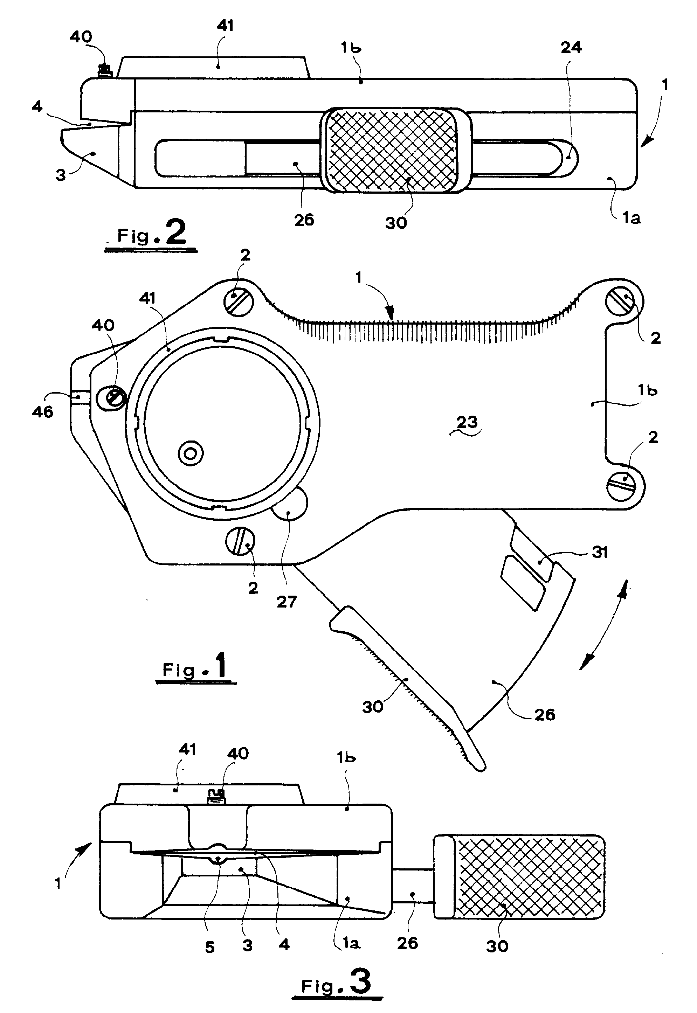

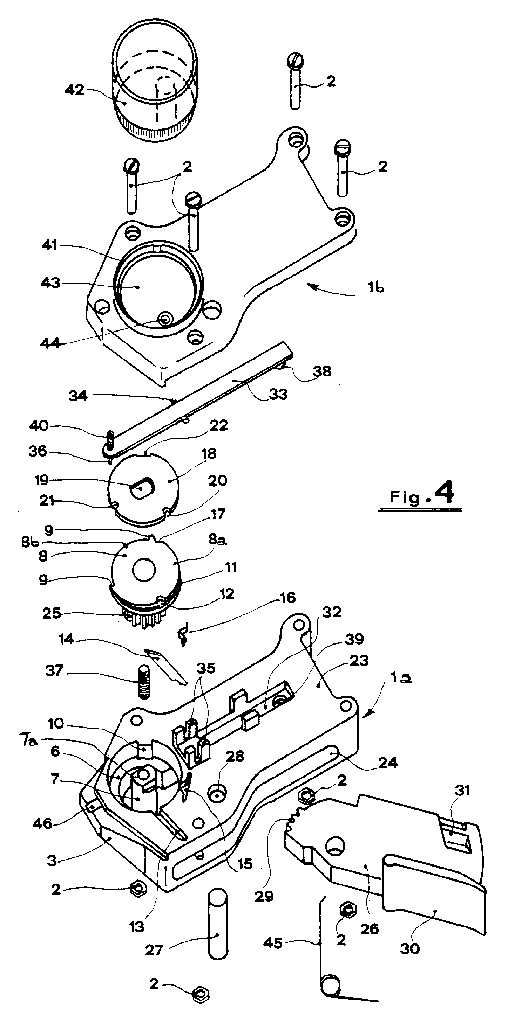

The top part 1b of the box-like casing 1 exhibits, in axial alignment with the drum 8 positioned underneath, a circular collar 41 for housing in a notch grip a container for plummets 42 of a type available on the market. On the base support 43 of the container 42 bounded by the collar 41 a through inlet hole 44 is bored in alignment with the groove 20 and an outlet hole, not illustrated in Fig. 4, is cut into the container 42 for the sinkers.

The device in accordance with the present invention functions as follows. In the initial rest position, the housing 12 of the drum 8 is aligned with the groove 20 and the inlet aperture 44, whilst the lever 26 is held in the retracted position by means of the spring 45, mounted coaxially with the pin 27. In these conditions, a sinker is present in the housing 12 and one of the shoulders 9 on the drum 8 is up against the projection 10 of the housing 6. The line having been inserted in the groove 4 on the front edge of the casing 1, the grip 30 of the lever 26 is operated to cause the same to recede into the cavity 24. Because the serrated surface 25 of the drum 8 and the serrated profile 29 of the lever 26 are mutually engaged, the movement of the latter causes the drum 8 to rotate; in detail, its housing 12 is brought into correspondence with the through hole 5 after a 90° turn, whose completion disengages the serrated profiles 25 and 29 and simultaneously engages the resilient component 16 in the housing 17 of the drum 8 so that the latter is locked in position with the housing 12 in complete alignment with the through hole 5. In the course of this movement of rotation, the cutting edge of the blade 14 projecting into the groove 11 in the edge of the drum 8 is brought into contact with the sinker accommodated in the housing 12 and makes a diametrical incision in it to a depth roughly equal to the radius of the sinker. When the sinker is brought into correspondence with the through hole 5, the line that has been placed on the bottom of the groove 4 engages in the incision made in it. In these conditions, the other one of the shoulders 9 comes up against the projection 10 of the housing 6 and thus prohibits, in conjunction with the resilient component 16, any movement of the drum 8. Continuing its receding movement, the lever 26 engages with its cam-shaped profile 31 the enlargement 38 of the arm 33, which is made to rotate round the pin 34, overcoming the reaction of the spring 37, and causing the pin 36 to descend and enter the groove 21 and the housing 12 underneath where the sinker is still housed and already engaged on the line, and so tighten it to the latter. Due to the symmetrical configuration of the cam 31, on the completion of the receding movement of the lever 26 the pin 36 is already in the raised position, thus enabling the line to be disengaged from the groove 4, whilst the sinker that has just been attached is conveyed through the through hole 5 and the outlet groove 46 opposite. Thereafter the lever 26, when the action on it ceases, reverts to the retracted position and the initial conditions are restored.

The dimensions of the housing 12 of the drum 8, and the thickness of the washer 18, are related to the size of the sinker to be attached, and are selected so as to ensure that the housing 12 can accommodate and convey not more than one sinker at a time.

Obviously, the device in accordance with the present invention will be adapted for the attachment of one size, or at the most two sizes, of sinker of the kind available on the market. But various models of the device in accordance with the present invention will be provided that are calibrated for the different sizes, the main difference between them lying in the thickness of the washer 18 and the dimensions of the grooves 20 and 21, the dimensions of the housing 12 and the depth of the groove 11 on the drum 8 and finally in the thickness of the cutting edge of the blade 14.

It is to be noted that the facility provided for regulating the length of the pin 36 by means of the adjusting screw 40 enables the pressure exercised on the sinker to be suitably apportioned, both in terms of its (the shinker's) dimensions and in terms of whether it is to be affixed firmly to the line or allowed to slide. The top part 1b of the casing 1 can be modified as appropriate in order to adapt it for containers for the sinkers of a different shape from the one illustrated, or it can also be equipped with a fixed container of its own for loading from time to time with slot.

Advantageously in order to reduce the space taken up by the device in accordance with the invention, the casing 1 can be provided with a strap that can be buckled round the grip 30 of the lever 26 so as to keep it in the receded position inside the grip 23.

## Claims

1. Device for attaching sinkers to fishing-rod lines comprising:
   – a box-like casing (1) having a grip (23),
   – a sinker conveying member (8) housed in said casing (1) for executing reciprocating angular displacements between a sinker retrieval station, where the sinker is retrieved from a container (42), and a sinker attaching station, where the sinker is affixed to the line that is positioned in a groove (4) formed laterally in said casing in correspondance to said sinker attaching station,
   – sinker cutting means (14) for making a diametrical cut in the sinker in the course of its travel from one station to the other one in such a manner that, when the sinker reaches the attaching station, the line engages in said cut,
   – a control lever (26) extending laterally from said grip (23) , pivotally connected to said casing (1) in a resilient way and operatively connected to said sinker conveying member (8) for angularly reciprocating the latter between said stations through its own movement,

– pressing means (36) housed in said casing (1) for squeezing the sinker after the line has been engaged with said diametrical cut;

said device being characterized in that said pressing means are pivotally connected to said casing for applying an adjustable tightening pressure to the sinker, while the latter still is in said sinker attaching station, and said control lever (26) has a cam-shaped portion (31) receding into the grip (23) during the driving movement of the lever, for operating said pressing means at the end of said movement.

2. Device in accordance with claim 1, wherein said sinker conveying member (8) is a cylindrical drum exhibiting in correspondence with its edge a housing (12) for a sinker and an underneath part comprising a cylindrical serrated surface (25), said lever (26) extending within said casing with one end (29) having a serrated profile engaged in said part comprising a cylindrical serrated surface, said drum having along its edge two shoulders (9) at right angles and being housed in a housing (6) of the same diameter with a radial projection (10) against which said shoulders (9) abut, thus restricting the rotation of the drum to an arc of 90°, comprised between the retrieval station and the sinker attaching station.

3. Device in accordance with the preceding claims, wherein said drum (8) has one section of the same diameter as said housing (6) and one of a smaller diameter, said housing (12) for the sinker being formed along the edge of the section larger in diameter halfway along a circumferential groove (11), said cutting means (14) comprising a fixed blade, the cutting edge of which projects into said circumferential groove.

4. Device in accordance with the preceding claims, wherein, in correspondence with said attaching station, a through hole (5) is formed for communicating said housing (6) for the rotation of the drum with said lateral groove (4), the sinker housing (12) formed on said drum (8) being reciprocatingly in alignment with said through hole (5) and with an outlet port of said container (42) on the completion of each 90° angular movement made by the drum.

5. Device in accordance with the preceding claims, wherein a fixed washer (18) is fitted on top of said drum (8) with two radial grooves (20,21) along its edge at right angles and in alignment with the retrieval station and the sinker attaching station, so that either the one or the other is aligned with said sinker housing (12) at the end of each 90° angular movement of the drum.

6. Device in accordance with the preceding claims, wherein said pressing means comprises a pin (36) projecting at right angle from an arm (33) pivotally connected to said casing in a resilient way, said pin being axially directed towards said sinker while the same is in said attaching station, said arm being driven by said cam-shaped piece (31) of said lever (26) at the end of its travel so as to cause the pin (36) to descend and enter said sinker housing (12) through the groove (20,21) of said washer that is aligned with it in order to tighten the sinker on the line.

7. Device in accordance with claim 6, wherein said pin (36) is integral with an adjusting screw (40) for registering the degree of pressure applied by it on the sinker.

8. Device in accordance with the preceding claims, wherein elastic means (16) for locking said drum (8), when the sinker housing (12) is aligned with said attaching station, are provided inside said housing (6) for the rotation of the drum itself.

**Patentansprüche**

1. Vorrichtung für die Zuordnung eines Senkbleis zu den Schnüren von Angelruten mit

– einem schachtelartigen Außengehäuse (1) mit einem Griff (23);

– einem Senkbleizuführungsmittel (8) in dem schachtelartigen Außengehäuse (1), das einander entgegengerichtete Winkelbewegungen zwischen einer Senkbleientnahmestation, in der das Senkblei einem Vorratsbehälter (42) entnommen wird und einer Senkbleizuordnungsstation, in der das Senkblei der Angelschnur fest zuzuordnen ist, auszuführen vermag, wobei die Zuordnung des Senkbleis zu der Angelschnur in deren Anordnung in einer Quernut (4) erfolgt, die in dem schachtelartigen Außengehäuse in Übereinstimmung mit der Senkbleizuordnungsstation quer ausgebildet ist;

– einem Senkbleischneidmittel (14) für die Herstellung eines diametralen Schnitts im Senkblei, während dieses von der einen zur anderen Station derart verbracht wird, daß, wenn das Senkblei die Zuordnungsstation erreicht hat, die Angelschnur in den Schnitt gelangt;

– einem Kontrollhebel (26), der sich vom Griff (23) aus quer erstreckt und mit dem schachtelartigen Gehäuse (1) federnd schwenkbar und in Wirkverbindung mit dem Senkblei Zuführungsmittel (8) verbunden ist, um durch Eigenbewegung letzteres zu Umkehrbewegungen zwischen den Stationen zu veranlassen;

– Drückmitteln (36) innerhalb des schachtelartigen Außengehäuses (1) zum Quetschen des Senkbleis, nachdem die Angelschnur in den diametralen Schnitt eingelegt worden ist;

wobei die Vorrichtung dadurch gekennzeichnet ist, daß die Drückmittel schwenkbar mit dem Gehäuse verbunden sind, um einen einstellbaren Quetschdruck auf das Senkblei aufzubringen, während dieses sich noch in der Senkbleizuordnungsstation befindet, und daß der Kontrollhebel (26) einen kammartigen Abschnitt (31) aufweist, der während der Antriebsbewegung des Hebels in den Griff (23) zurückweicht, um am Ende dieser Bewegung die Drückmittel zu betätigen.

2. Vorrichtung in Übereinstimmung mit Anspruch 1, bei der das Senkbleizuführungsmittel (8) eine zylindrische Trommel ist, die, im Bereich ihrer Außenfläche und in Übereinstimmung mit dieser, mit einem Aufnahmegehäuse (12) für ein Senkblei zusammenwirkt und in einem unteren Abschnitt eine zylindrische, gezahnte Oberfläche (25) hat, mit der der Kontrollhebel (26) mittels eines zylindrischen, gezahnten und in das schachtelartige Außengehäuse hineinragenden Endes zusammenwirkt, wobei die Tromnmel auf ihren Außenumfang verteilt zwei um einen rechten Winkel gegeneinander versetzte schulterförmige Anschläge (9) aufweist, mit denen die Trommel mit an einem die Trommel umgebenden Außengehäuse (6) festen, radial gerichteten Vorsprüngen (10) zusammenwirkt, um so die Drehbarkeit der Trommel auf einen bogen von 90° zu beschränken, der den Weg zwischen Senkbleientnahmestation und Senkbleizuordnungsstation kennzeichnet.

3. Vorrichtung in Übereinstimmung mit den vorhergehenden Ansprüchen, bei der die Trommel (8) einen Abschnitt mit einem Durchmesser aufweist, der dem des sie umgebenden Außengehäuseteils (6) gleich ist und einen Abschnitt mit kleinerem Durchmesser, wobei das Aufnahmegehäuse (12) für das Senkblei im bereich des Abschnitts mit größerem Durchmesser sich befindet, wobei sich über den halben Umfang eine Umfangsnut (11) erstreckt, in die die Schneidkante des eine feste Schneide aufweisenden Schneidmittels (14) hineinragt.

4. Vorrichtung in Übereinstimmung mit den vorhergehenden Ansprüchen, bei der, in Übereinstimmung mit der Zuordnungsstation, eine Durchgangsöffnung (5) gebildet ist, um den die drehbare Trommel umgebenden Gehäuseteil (6) mit der Quernut (4) zu verbinden, wobei das auf der Trommel (8) gebildete Aufnahmegehäuse (12) einerseits in Übereinstimmung mit der Durchgangsöffnung (5) und andererseits in Übereinstimmung mit einer Auslaßöffnung des Vorratsbehälters (42) befindet, nachdem die Trommel eine bewegung in einer der beiden Richtungen um 90° ausgeführt hat.

5. Vorrichtung in Übereinstimmung mit den vorhergehenden Ansprüchen, bei der eine feste Unterlegscheibe (18) der Oberseite der Trommel (8) zugeordnet ist, auf deren Rand zwei nach innen gerichtete Nuten (20,21) unter einem rechten Winkel relativ zueinander verteilt angeordnet sind und damit in Übereinstimmung mit der Senkbleiaufnahmestation und der Senkbleizuordnungsstation angeordnet sind, so daß am Ende jeder bewegung der Trommel über einen Winkel von 90° entweder die eine oder die andere Station mit dem Aufnahmegehäuse (12) verbunden ist.

6. Vorrichtung in Übereinstimmung mit den vorhergehenden Ansprüchen, bei der das Preßmittel einen Zapfen (36) aufweist, der in einem rechten Winkel zu einem Hebelarm (33) von diesem absteht, der federnd drehbar mit dem schachtelartigen Außengehäuse verbunden ist, wobei der Zapfen axial gegen das Senkblei gerichtet ist, das sich in,der Zuordnungsstation befindet, wobei der Hebelarm von dem kammartigen Abschnitt (31) des Kontrollhebels (26) am Ende des Verstellwegs angetrieben wird, um den Zapfen (36) zu veranlassen, durch die Nut (20,21) der Unterlegscheibe in das Aufnahmegehäuse (12) einzudringen, die so ausgerichtet ist, daß das Senkblei auf der Angelschnur befestigt wird.

7. Vorrichtung in Übereinstimmung mit Anspruch 6, bei der der Zapfen (36) einstückig mit einer Einstellschraube (40) ist, um so den Druck einstellen zu können, der von ihm auf das Senk- blei aufgebracht wird.

8. Vorrichtung in Übereinstimmung mit den vorhergehenden Ansprüchen, bei der zum Drehen der Trommel auf der Innenseite des die Trommel umgebenden Gehäuseteils (6) elastische Mittel (16) zum Verriegeln der Trommel bei Ausrichtung des Aufnahmegehäuses (12) auf die Zuordnungsstation vorgesehen sind.

## Revendications

1. Dispositif pour l'accrochage des plombs sur les lignes de canne à pêche comprenant :
    – une gaine (1) en forme de caisse munie d'une poignée (23),
    – un élément (8) d'acheminement des plombs placé à l'intérieur de ladite gaine (1) destiné à exécuter des déplacements angulaires avant-arrière entre un poste de récupération des plombs, où est récupéré le plomb provenant d'un bac (42), et un poste d'accrochage des plombs, où le plomb est fixé sur la ligne qui est positionnée dans une rainure (4) formée latéralement dans ladite gaine en correspondance avec ledit poste d'accrochage des plombs,
    – des moyens d'entaillage (14) des plombs pour réaliser une entaille diamétriale dans le plomb lors de son déplacement d'un poste à l'autre de telle façon que, lorsque le plomb atteint le poste d'accrochage, la ligne vienne s'engager dans ladite entaille,
    – un levier de commande (26) prolongeant latéralement ladite poignée (23), monté pivotant sur ladite gaine (1) et de manière élastique, et coopérant avec ledit élément (8) d'acheminement des plombs en vue du va-et-vient angulaire de ce dernier entre lesdits postes par son propre mouvement,

– des moyens de pressage (36) situés dans ladite gaine (1) pour resserrer le plomb après que la ligne ait été engagée dans ladite entaille diamétriale ;

ledit dispositif étant *caractérisé en ce que* lesdits moyens de pressage sont montés pivotants sur ladite gaine en vue d'appliquer une pression de serrage réglable sur le plomb, ce dernier étant encore dans ledit poste d'accrochage des plombs, et ledit levier de commande (26) possédant une partie (31) en forme de came s'enfonçant dans la poignée (23) pendant le mouvement d'entraînement du levier, afin d'actionner lesdits moyens de pressage à la fin dudit mouvement.

2. Dispositif selon la Revendication 1, dans lequel ledit élément (8) d'acheminement des plombs est un tambour cylindrique offrant, en correspondance avec son flanc, un logement (12) pour un plomb et une partie inférieure comprenant une surface cylindrique dentelée (25), ledit levier (26) s'étendant à l'intérieur de ladite gaine avec une extrémité (29) présentant un profil dentelé s'engrenant avec ladite partie comprenant une surface cylindrique dentelée, ledit tambour présentant sur son flanc deux épaulements (9) à angle droit et étant logé dans un logement (6) du même diamètre avec une saillie radiale (10) contre laquelle lesdits épaulements (9) viennent s'abouter, restreignant ainsi la rotation du tambour à un arc de 90° situé entre le poste de récupération et le poste d'accrochage des plombs.

3. Dispositif selon les Revendications précédentes, dans lequel ledit tambour (8) possède une section de même diamètre que ledit logement (6) et une section d'un diamètre inférieur, ledit logement (12) pour le plomb étant formé sur le flanc de la section de plus grand diamètre à mi-longueur sur une gorge circonférentielle (11), lesdits moyens d'entaillage (14) comprenant une lame fixe dont le tranchant s'avance dans ladite gorge circonférentielle.

4. Dispositif selon les Revendications précédentes, dans lequel est formé, en correspondance avec ledit poste d'accrochage, un trou de passage (5) destiné à faire communiquer ledit logement (6) pour la rotation du tambour avec ladite rainure latérale (4), le logement (12) pour le plomb formé dans ledit tambour (8) étant alternativement dans l'alignement dudit trou de passage (5) et d'un orifice de sortie dudit bac (42) lors de l'accomplissement de chaque déplacement angulaire de 90° effectué par le tambour.

5. Dispositif selon les Revendications précédentes, dans lequel une rondelle fixe (18) est assujettie sur le dessus dudit tambour (8), rondelle présentant deux rainures radiales (20, 21) sur son flanc à angles droits et en alignement avec le poste de récupération et le poste d'accrochage des plombs, de telle façon que soit l'une, soit l'autre soit alignée avec ledit logement (12) du plomb à la fin de chaque déplacement angulaire de 90° du tambour.

6. Dispositif selon les Revendications précédentes, dans lequel lesdits moyens de pressage comprennent une broche (36) saillant selon un angle droit d'un bras (33) monté pivotant de manière résiliente sur ladite gaine, ladite broche étant dirigée axialement vers ledit plomb lorsque celui-ci se trouve dans ledit poste d'accrochage, ledit bras étant mu par ladite pièce (31) en forme de'came dudit levier (26) à la fin de son déplacement afin d'entraîner la descente de la broche (36) et son insertion dans ledit logement (12) du plomb en traversant la rainure (20, 21) de ladite rondelle qui est alignée avec elle de manière à refermer le plomb sur la ligne.

7. Dispositif selon la Revendication 6, dans lequel ladite broche (36) est réalisée d'une seule pièce avec une vis de réglage (40) destinée à régler le degré de pression appliqué par elle sur le plomb.

8. Dispositif selon les Revendications précédentes, dans lequel des moyens élastiques (16) pour bloquer ledit tambour (8) lorsque le logement (12) du plomb est aligné avec ledit poste d'accrochage, sont prévus à l'intérieur dudit logement (6) pour la rotation du tambour lui-même.

Fig. 2

Fig. 1

Fig. 3

Fig.4